# DEMANDE DE BREVET EUROPEEN

(11) **EP 4 851 068 A1**
(43) Date de publication de la demande: **09.12.2026**
(21) Numéro de dépôt: 26182325.6
(22) Date de dépôt: 01.06.2026
(51) Int. Cl.: B65D 81/26, B65D 81/34

(54) **POCHE DE CUISSON, EN PARTICULIER POUR LA CUISSON D'UN PRODUIT ALIMENTAIRE FERMENTÉ, ET PROCÉDÉ DE PRÉPARATION D'UN PRODUIT ALIMENTAIRE**

(30) Priorité: 04.06.2025 FR 2506032
(71) Demandeur: Cuisine Solutions Europe, 27400 Heudebouville (FR)
(72) Inventeur: JOURDIN, Christophe, 27400 HEUDEBOUVILLE (FR); MARQUET, Olivier, 27400 HEUDEBOUVILLE (FR); GUINCHARD, Fabrice, 27400 HEUDEBOUVILLE (FR)
(74) Mandataire: Cabinet Le Guen Maillet

(57) **Abrégé**

L'invention concerne une poche (100) pour la cuisson d'un produit alimentaire (50) qui comporte un premier film et un deuxième film superposé au premier film, où les films sont fixés l'un à l'autre par l'intermédiaire d'une première ligne de soudure (106) délimitant entre les deux films, un premier volume pour recevoir le produit alimentaire (50), où les films sont également fixés l'un à l'autre par l'intermédiaire d'une deuxième ligne de soudure (108) enfermant de manière étanche la première ligne de soudure (106) et délimitant entre les deux films et les deux lignes de soudure (106, 108), un deuxième volume et où les volumes sont en communication fluidique par un passage (106a) formé à travers la première ligne de soudure (106).

## Description

### DOMAINE TECHNIQUE

La présente invention concerne une poche de cuisson, en particulier pour la cuisson sous vide d'un produit fermenté, en particulier du type sandwich, tartine ou burger. La présente invention concerne également un procédé de préparation d'un produit fermenté en utilisant une telle poche de cuisson.

### ÉTAT DE LA TECHNIQUE ANTÉRIEURE

Le brevet FR-B-3 109 495 divulgue un procédé de préparation d'un produit fermenté tel qu'un sandwich ou un burger par assemblage puis mise dans une poche sous vide du produit avant cuisson.

Si un tel procédé donne satisfaction, il peut arriver que lors de la fermentation et de la cuisson, la partie boulangère constituant une partie du produit gonfle et il peut arriver que ce gonflement déstabilise le produit dans la poche qui se désassemble du fait qu'il n'est pas suffisamment maintenu par la poche. En outre, cette poche peut se percer du fait de l'augmentation de volume ou nécessiter un volume mort trop important pour une présentation soignée ultérieure à l'utilisateur final.

Il est donc nécessaire de trouver un arrangement qui permet de maintenir l'assemblage en particulier lors de la cuisson du produit.

### EXPOSÉ DE L'INVENTION

Un objet de la présente invention est de proposer une poche de cuisson qui présente un arrangement particulier permettant de maintenir le produit tout en autorisant l'évacuation des gaz issus de la fermentation et de la cuisson.

À cet effet, est proposée une poche pour la cuisson d'un produit alimentaire, ladite poche comportant :
- un premier film, et
- un deuxième film superposé au premier film, le premier film et le deuxième film étant fixés l'un à l'autre par l'intermédiaire d'une première ligne de soudure délimitant entre les deux films, un premier volume destiné à recevoir le produit alimentaire,
la poche étant caractérisée en ce que le premier film et le deuxième film sont également fixés l'un à l'autre par l'intermédiaire d'une deuxième ligne de soudure enfermant de manière étanche la première ligne de soudure et délimitant entre les deux films et les deux lignes de soudure, un deuxième volume et le premier volume et le deuxième volume sont en communication fluidique par un passage formé à travers la première ligne de soudure.

Avec une telle poche, le produit alimentaire est mieux maintenu.

Avantageusement, l'un des films présente une empreinte conformée à la forme du produit alimentaire.

La présente invention concerne également un procédé de préparation d'un produit alimentaire à l'aide d'une poche selon l'une des variantes précédentes, ledit procédé comportant :
- une première étape de fourniture au cours de laquelle le premier film est fourni,
- une deuxième étape de fourniture au cours de laquelle le deuxième film est fourni,
- une étape de mise en place au cours de laquelle le produit alimentaire est déposé sur le premier film,
- une étape de recouvrement au cours de laquelle le deuxième film est disposé par-dessus le produit alimentaire ainsi déposé,
- une première étape de scellage au cours de laquelle le premier film et le deuxième film sont scellés l'un à l'autre au niveau de la première ligne de soudure et de la deuxième ligne de soudure,
- une étape de cuisson au cours de laquelle l'ensemble ainsi formé est soumis à une cuisson, et
- une étape de refroidissement au cours de laquelle l'ensemble ainsi cuit est refroidi.

Avantageusement, le procédé de préparation comporte après l'étape de refroidissement, une deuxième étape de scellage au cours de laquelle le passage est hermétiquement scellé.

Avantageusement, le procédé de préparation comporte après la deuxième étape de scellage, une étape de découpe au cours de laquelle le premier et le deuxième films sont découpés entre les deux lignes de soudure.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 illustre schématiquement une vue de dessus d'une poche de cuisson selon l'invention,
Fig. 2 est une vue en coupe selon la ligne II-II de la poche de la Fig. 1, et
Fig. 3 illustre schématiquement un algorithme d'un procédé de préparation d'un produit alimentaire selon l'invention.

### EXPOSÉ DÉTAILLÉ DE MODES DE RÉALISATION

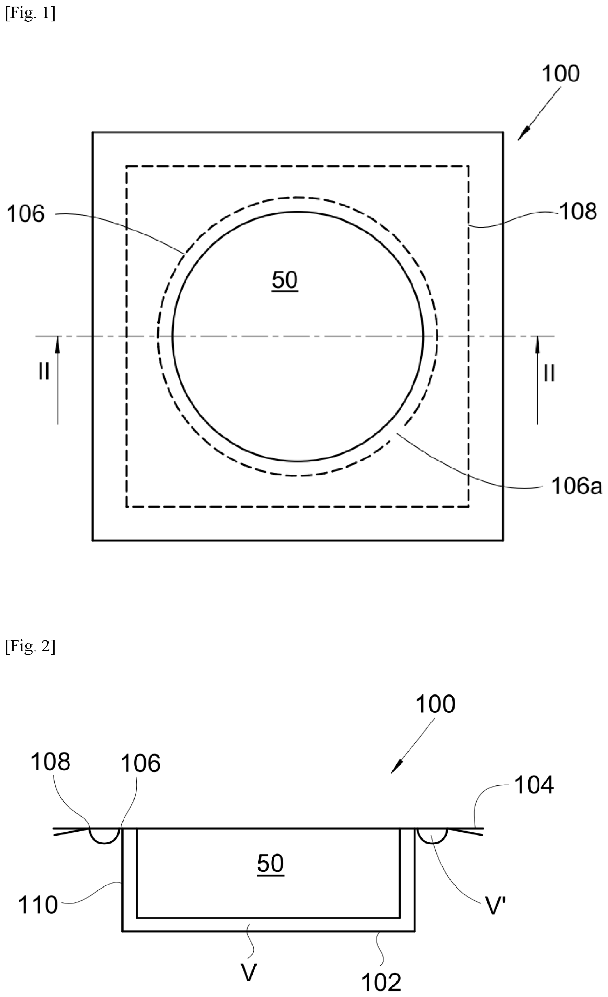

La Fig. 1 montre une poche 100 pour la cuisson d'un produit alimentaire 50, en particulier du type sandwich ou burger. Un tel produit alimentaire 50 est constitué d'une partie boulangère réalisée à partir de matières premières traditionnelles de boulangerie comme, en particulier, la farine, l'eau, la levure et le sel. Lorsque cette partie boulangère est soumise à une cuisson ou à un temps long, elle gonfle et produit du dioxyde de carbone.

Le produit alimentaire 50 peut également contenir des ingrédients qui sont arrangés dans la partie boulangère. Ces ingrédients peuvent être de différentes formes, il peut s'agir par exemple de légumes, de produits carnés crus ou cuits, de sauces...

La Fig. 2 montre une coupe de la poche 100 et du produit alimentaire 50.

La poche 100 comporte un premier film 102 et un deuxième film 104 où le deuxième film 104 est superposé au premier film 102 en prenant le produit alimentaire 50 en sandwich. Les films 102 et 104 sont réalisés dans des films alimentaires pouvant être scellés l'un à l'autre par tous systèmes de scellage/soudure connus de l'homme du métier, comme par exemple par application de chaleur.

Le premier film 102 et le deuxième film 104 sont fixés l'un à l'autre par l'intermédiaire d'une première ligne de soudure 106 qui fait le tour du produit alimentaire 50 qui est ainsi enfermé dans un premier volume (V) délimité entre les deux films 102 et 104.

Le premier volume V sert à maintenir le produit alimentaire 50 durant sa cuisson, et il est dimensionné pour être au plus juste par rapport au produit alimentaire 50 à son stade final de préparation, c'est-à-dire que le premier volume V enserre le produit alimentaire 50 suffisamment pour le maintenir sans l'écraser.

Le premier film 102 et le deuxième film 104 sont également fixés l'un à l'autre par l'intermédiaire d'une deuxième ligne de soudure 108 qui est autour de la première ligne de soudure 106 et enferme ainsi de manière étanche cette dernière. Les deux scellages sont effectués sous vide partiel.

Cette deuxième ligne de soudure 108 assure entre autres une barrière anticontamination par rapport à l'extérieur. Les deux lignes de soudure 106 et 108 sont distinctes.

Entre les deux films 102 et 104 et les deux lignes de soudure 106 et 108, un deuxième volume V' est délimité.

En outre, le premier volume V et le deuxième volume V' sont en communication fluidique par un passage 106a formé à travers la première ligne de soudure 106. Le passage 106a est une zone qui n'a pas été scellée ou une zone de scellage fragile qui se rompt lorsque la pression augmente dans le premier volume V en laissant intact le reste de la première ligne de soudure 106.

Le deuxième volume V' est prévu pour recevoir les gaz issus de la cuisson du produit alimentaire 50. En effet, lors de la cuisson du produit alimentaire 50, les gaz qui se dégagent dans le premier volume V s'échappent par le passage 106a, évitant ainsi une surpression dans le premier volume V et garantissant que le premier volume V conserve une forme adaptée à la forme que le produit alimentaire 50 doit avoir en fin de préparation.

La position de la deuxième ligne de soudure 108 est telle qu'elle permet à tout le gaz de se stocker dans le deuxième volume V'.

Les dimensions du passage 106a sont déterminées de manière à permettre un certain débit de gaz mais le passage 106a ne peut pas être trop grand pour éviter que du produit alimentaire 50 s'écoule par ce passage 106a. Dans le mode de réalisation de l'invention représenté ici, il y a un seul passage 106a, mais il est possible de prévoir plusieurs passages 106a répartis le long de la première ligne de soudure 106. Selon un mode de réalisation particulier, le ou chaque passage 106a présente une longueur comprise entre 2 et 5 mm.

Pour faciliter le positionnement du produit alimentaire 50 et son maintien, l'un des films 102 ou 104 (ici le premier film 102 qui est positionné en dessous) présente une empreinte 110 conformée à la forme du produit alimentaire 50, en particulier à sa forme finale. Ici, c'est le premier film 102 qui présente l'empreinte 110. Ici l'empreinte 110 prend la forme d'un cylindre.

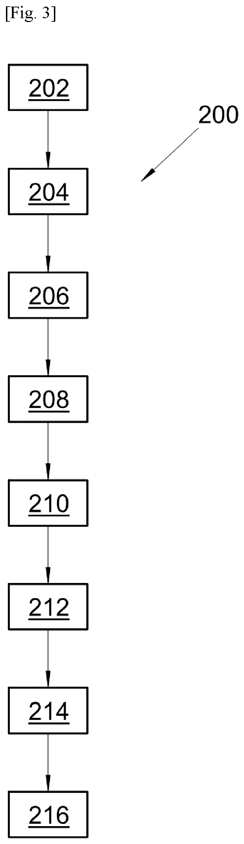

La Fig. 3 montre un organigramme d'un procédé de préparation 200 d'un produit alimentaire 50 à l'aide de la poche 100 selon l'invention. Le procédé 200 comporte ainsi :
- une première étape de fourniture 202 au cours de laquelle le premier film 102 est fourni,
- une deuxième étape de fourniture 202 au cours de laquelle le deuxième film 104 est fourni,
- une étape de mise en place 204 au cours de laquelle le produit alimentaire 50 fourni par ailleurs, est déposé sur le premier film 102,
- une étape de recouvrement 206 au cours de laquelle le deuxième film 104 est disposé par-dessus le produit alimentaire 50 ainsi déposé,
- une première étape de scellage 208 au cours de laquelle le premier film 102 et le deuxième film 104 sont scellés l'un à l'autre au niveau de la première ligne de soudure 106 et de la deuxième ligne de soudure 108 pour former les volumes V et V',
- une étape de cuisson 210 au cours de laquelle l'ensemble ainsi formé est soumis à une cuisson, et
- une étape de refroidissement 212 au cours de laquelle l'ensemble ainsi cuit est refroidi.

La première ligne de soudure 106 et la deuxième ligne de soudure 108 peuvent être réalisées simultanément ou l'une après l'autre.

Lors de la première étape de scellage 208, la zone correspondant au passage 106a n'est pas scellée ou est une zone de scellage fragile.

Comme précisé ci-dessus, le procédé s'effectue sous vide partiel.

L'étape de cuisson 210 s'effectue en particulier dans un four ou une cuve de cuisson remplie d'eau chaude et l'étape de refroidissement 212 s'effectue par exemple dans une enceinte réfrigérée ou dans un fluide à basse température.

Après l'étape de refroidissement 212, le procédé de préparation 200 peut comporter une deuxième étape de scellage 214 au cours de laquelle le passage 106a est hermétiquement scellé pour enfermer le produit alimentaire 50 à son stade final de préparation.

Selon un mode de réalisation particulier, le procédé de préparation 200 comporte après la deuxième étape de scellage 214, une étape de découpe 216 au cours de laquelle le premier et le deuxième films 102, 104 sont découpés entre les deux lignes de soudure 106 et 108. Un tel arrangement permet de limiter la quantité de film tout en garantissant l'hygiène du fait que le passage 106a a été préalablement scellé.

## Revendications

1. Poche (100) pour la cuisson d'un produit alimentaire (50), ladite poche (100) comportant :
- un premier film (102), et
- un deuxième film (104) superposé au premier film (102), le premier film (102) et le deuxième film (104) étant fixés l'un à l'autre par l'intermédiaire d'une première ligne de soudure (106) délimitant entre les deux films (102, 104), un premier volume (V) destiné à recevoir le produit alimentaire (50),
la poche (100) étant **caractérisée en ce que** le premier film (102) et le deuxième film (104) sont également fixés l'un à l'autre par l'intermédiaire d'une deuxième ligne de soudure (108) enfermant de manière étanche la première ligne de soudure (106) et délimitant entre les deux films (102, 104) et les deux lignes de soudure (106, 108), un deuxième volume (V') et **en ce que** le premier volume (V) et le deuxième volume (V') sont en communication fluidique par un passage (106a) formé à travers la première ligne de soudure (106).

2. Poche (100) selon la revendication 1, **caractérisée en ce que** l'un des films (102, 104) présente une empreinte (110) conformée à la forme du produit alimentaire (50).

3. Procédé de préparation (200) d'un produit alimentaire (50) à l'aide d'une poche (100) selon l'une des revendications 1 ou 2, ledit procédé (200) comportant :
- une première étape de fourniture (202) au cours de laquelle le premier film (102) est fourni,
- une deuxième étape de fourniture (202) au cours de laquelle le deuxième film (104) est fourni,
- une étape de mise en place (204) au cours de laquelle le produit alimentaire (50) est déposé sur le premier film (102),
- une étape de recouvrement (206) au cours de laquelle le deuxième film (104) est disposé par-dessus le produit alimentaire (50) ainsi déposé,
- une première étape de scellage (208) au cours de laquelle le premier film (102) et le deuxième film (104) sont scellés l'un à l'autre au niveau de la première ligne de soudure (106) et de la deuxième ligne de soudure (108),
- une étape de cuisson (210) au cours de laquelle l'ensemble ainsi formé est soumis à une cuisson, et
- une étape de refroidissement (212) au cours de laquelle l'ensemble ainsi cuit est refroidi.

4. Procédé de préparation (200) selon la revendication 3, **caractérisé en ce qu'**il comporte après l'étape de refroidissement (212), une deuxième étape de scellage (214) au cours de laquelle le passage (106a) est hermétiquement scellé.

5. Procédé de préparation (200) selon la revendication 4, **caractérisé en ce qu'**il comporte après la deuxième étape de scellage (214), une étape de découpe (216) au cours de laquelle le premier et le deuxième films (102, 104) sont découpés entre les deux lignes de soudure (106, 108).
